# FASCICULE DE BREVET EUROPEEN

(11) **EP 2 706 824 B1**
(45) Date de publication et mention de la délivrance du brevet: **11.07.2018**
(21) Numéro de dépôt: 13368029.8
(22) Date de dépôt: 10.09.2013
(51) Int. Cl.: H05B 37/02, H05B 33/08

(54) **Lampe électrique portative dotée d'un système anti-éblouissement**
Tragbare elektrische Lampe, die mit einem Blendschutzsystem ausgestattet ist
Portable electric lamp provided with an anti-glare system

(30) Priorité: 11.09.2012 FR 1202418
(43) Date de publication de la demande: 12.03.2014
(73) Titulaire: Zedel S.A., 38920 Crolles (FR)
(72) Inventeur: Genthon, Fabien, 38920 Crolles (FR); Pellat-Finet, Romain, 38000 Grenoble (FR)
(74) Mandataire: Schuffenecker, Thierry

(56) Documents cités:
- WO-A1-03/089838
- FR-A1- 2 930 706
- US-A- 6 095 661
- US-B1- 7 410 271

## Description

### Domaine technique de l'invention

La présente invention concerne le domaine des lampes électriques portatives et notamment, une lampe électrique portative dotée d'un système anti-éblouissement.

### Etat de la technique

La demanderesse de la présente demande de brevet a commercialisé une lampe portative, de type lampe frontale, doté d'un éclairage dit « réactif » ou « dynamique » qui est décrite dans la demande de brevet WO2009/133309. Brièvement, comme cela est illustrée dans la figure 1, il s'agit d'une lampe frontale comportant au moins une diode électroluminescente 11 de type LED ainsi qu'un capteur optique 14 logé dans son voisinage et destiné à capter un signal représentatif de la lumière réfléchie par la surface d'un objet 16 éclairé par la lampe. Un circuit de commande 13 assure un traitement de ce signal dans le but de réguler automatiquement la puissance de la LED en fonction d'un seuil prédéterminé. De cette manière, une régulation automatique du faisceau lumineux émis par la lampe est effectuée sans autre action manuelle afin d'adapter l'éclairage à l'environnement, tout en gérant la consommation en énergie.

Le principe de cet éclairage « dynamique » constitue indéniablement une avancée significative dans le domaine des lampes frontales, et plus généralement de l'éclairage portatif, notamment en ce qu'elle permet d'adapter l'éclairage de manière constante aux conditions d'éclairement.

En revanche, cette lampe ne permet pas de supprimer le phénomène d'éblouissement auquel est exposé un interlocuteur faisant face au porteur d'une lampe frontale.

Une solution à ce problème est décrite dans la demande de brevet PCT/EP2012/000983, déposée le 6 Mars 2012 par la Demanderesse de la présente demande de brevet et non publiée à la date de dépôt de la présente demande de brevet. Cette solution passe par l'utilisation d'un capteur d'images associé à un processeur d'image pouvant traiter les images dans le but de permettre une reconnaissance d'un visage, et notamment d'un oeil, de manière à réduire automatiquement la luminosité de la lampe lorsque les conditions d'éclairage exposent une personne à une éblouissement dangereux.

Une telle solution requiert une architecture sophistiquée, à base de microprocesseur et de traitement d'images, et reste malheureusement réservée aux lampes les plus coûteuses.

Il est souhaitable, par conséquent, de pouvoir disposer, pour toutes les lampes portatives et non seulement les plus coûteuses, d'un système de sécurité permettant de supprimer, ou à tout le moins de réduire le phénomène d'éblouissement.

WO 03/089838 décrit un dispositif lumineux susceptible de communiquer avec d'autres dispositifs lumineux afin de réaliser des séquences lumineuses synchronisées. Il n'est nullement évoqué la problématique liée aux lampes frontales.

### Exposé de l'invention

C'est un but de la présente invention que de réaliser une lampe frontale économique dotée d'un mécanisme de régulation avancé permettant d'éviter ou tout au moins de réduire le phénomène d'éblouissement qui peut être très dangereux pour un oeil humain.

C'est un autre but de la présente invention que de réaliser un procédé de commande amélioré de l'intensité lumineuse d'une lampe frontale, susceptible de communiquer avec d'autres lampes portatives ou frontales, et permettant d'apporter de nouvelles fonctionnalités à l'utilisateur.

C'est un autre but de la présente invention consiste à réaliser une lampe frontale dotée de fonctionnalités nouvelles, notamment de communication, utilisables dans un grand nombre d'applications.

L'invention réalise ces buts au moyen d'une lampe frontale portative comportant des moyens de communication , notamment sur un canal infrarouge distinct du canal lumineux, pour échanger, avec une autre lampe portative des données d'identification, de configuration ou des instructions de commande.

De préférence, la lampe frontale comporte:
- au moins une source lumineuse permettant de générer au moins un faisceau lumineux;
- des moyens de commande de la luminosité en réponse à une information de commande généré par un module de commande.

Le module de commande comporte un capteur générant un signal représentatif de la lumière réfléchie et des moyens de traitement du signal pour générer l'information de commande.

La source lumineuse pourra être de type ampoule (halogène) ou, de préférence, une source lumineuse de type LED, OLED etc...

Plus spécifiquement, les moyens de communication servent à éviter une situation d'éblouissement.

Dans un mode de réalisation spécifique, le module de commande comporte en outre :
- un émetteur infrarouge capable d'émettre périodiquement des données sur un canal de communication IR présentant un premier faisceau
- des moyens pour capter un rayonnement IR suivant un cône de réception plus étroit que le premier faisceau;
- des moyens de traitement du signal généré pour traiter le signal représentatif de l'information IR captée et détecter la présence d'une seconde lampe émettant un signal IR;
- des moyens pour réduire significativement la puissance générée par lesdites diodes en réponse à la détection d'une lampe partenaire émettant des données sur le canal IR.

Dans un mode de réalisation préféré, la lampe portative comporte un faisceau large et un faisceau étroit, le faisceau étroit étant réduit significativement en réponse à la détection d'une lampe partenaire émettant sur le canal IR. Alternativement, la lampe portative peut comporter un ou plusieurs faisceaux désaxés permettant d'être commandées de manière différenciées.

Dans un mode de réalisation particulier, le module de commande préserve en fin de vie de la batterie l'émission infrarouge au détriment des faisceaux lumineux visibles de manière à prolonger la protection de son porteur contre les situations d'éblouissement.

De préférence, la lampe comporte des moyens de configuration, notamment suivant un ou plusieurs profils déterminés, ladite configuration étant réalisée au moyen d'un port USB permettant la communication avec un ordinateur, une tablette tactile ou un téléphone intelligent (*smartphone*).

L'invention est particulièrement adaptée à la réalisation d'une lampe frontale.

Suivant un autre mode de réalisation, l'invention permet de réaliser un dispositif de communication destiné à être positionné sur la tête d'un utilisateur ou associée à une lampe portative d'un utilisateur. Le dispositif comporte lui également des moyens de communication avec une lampe portative de manière à protéger son porteur d'une situation d'éblouissement.

Enfin, l'invention permet en outre la réalisation d'un procédé de régulation de la puissance émise par une lampe portative comportant une source lumineuse dotée d'une ou plusieurs sources (lampe halogène, LED, OLED etc...) permettant de générer au moins un faisceau lumineux, ladite lampe portative comportant des moyens d'émission et de réception d'un canal IR, le cône de réception dudit canal IR étant plus étroit que le cône du faisceau d'émission.

Le procédé est caractérisé en ce qu'il comporte les étapes:
- émission d'un trame d'information sur ledit canal IR ;
- réception d'un signal IR capté sur ledit cône de réception étroit;
- détection d'un signal IR correspondant à un signal émis par une autre lampe émettant sur ledit canal IR;
- réduction de la puissance lumineuse de la lampe en réponse à la détection d'une autre lampe émettant sur ledit canal IR.

### Description des dessins

D'autres caractéristiques, but et avantages de l'invention apparaîtront à la lecture de la description et des dessins ci-après, donnés uniquement à titre d'exemples non limitatifs. Sur les dessins annexés :

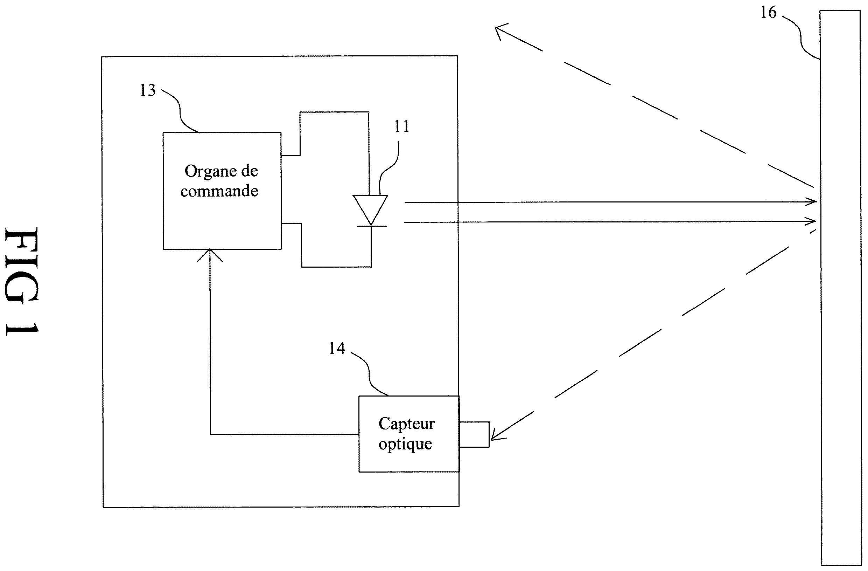

La figure 1 illustre l'architecture générale d'une lampe à éclairage dynamique conventionnelle.
La figure 2 représente un synoptique d'un premier mode de réalisation de l'invention, comportant deux faisceaux, respectivement large et étroit.
La figure 3 montre un second mode de réalisation comportant deux faisceaux désaxés.
La figure 4 est une mise en situation de la lampe frontale de la figure 2 pour illustrer le fonctionnement du procédé de régulation.
La figure 5 illustre un mode de réalisation d'un procédé de communication d'une lampe frontale conforme à la présente invention.
La figure 6 illustre un troisième mode de réalisation basée sur une architecture de microprocesseur.

### Description d'un mode de réalisation préféré

L'on décrit à présent comment l'on peut venir significativement améliorer le fonctionnement d'une lampe portative, telle qu'une lampe frontale, une lampe de poche ou tout autre dispositif mobile doté d'un système d'éclairage autonome, intégrant par exemple une régulation "dynamique" ou "réactive" comportant:
- une source lumineuse quelconque, par exemple dotée d'une ou plusieurs diodes LED, mais également plus généralement de toute source lumineuse (lampe halogène, OLED etc...),
- des moyens de commande de la luminosité des LEDs en réponse à une information de commande généré par un module de commande.

Le module de commande comporte un capteur générant un signal représentatif de la lumière réfléchie et des moyens de traitement du signal pour générer l'information de commande. En général l'on utilise un photocapteur de type monocapteur. D'une manière générale, on entend par monocapteur un capteur susceptible de générer une information analogique ou numérique élémentaire, à l'exclusion d'un capteur d'images générant une information structurée en une matrice composée de pixels, et qui fait l'objet de la demande de brevet précitée. Le photocapteur présente clairement l'avantage, par rapport à un capteur d'images, de permettre une réalisation économique et de grand public.

La lampe comporte en outre des moyens de communication, notamment sur un canal infrarouge distinct du canal lumineux, pour échanger, avec une autre lampe portative des données d'identification, de configuration ou des instructions de commande. Alternativement, l'on pourra envisager un canal de communication modulé sur la lumière visible, ou même tout autre moyen de communication sans fil.

Dans un mode de réalisation particulier, les moyens de communication servent à éviter une situation d'éblouissement.

Bien évidemment, il ne s'agit là que d'exemples non limitatifs et un homme du métier pourra adapter l'invention à d'autres dispositifs d'éclairage pour en accroître la sécurité de fonctionnement.

### A. Un premier mode de réalisation comportant deux faisceaux respectivement large et étroit

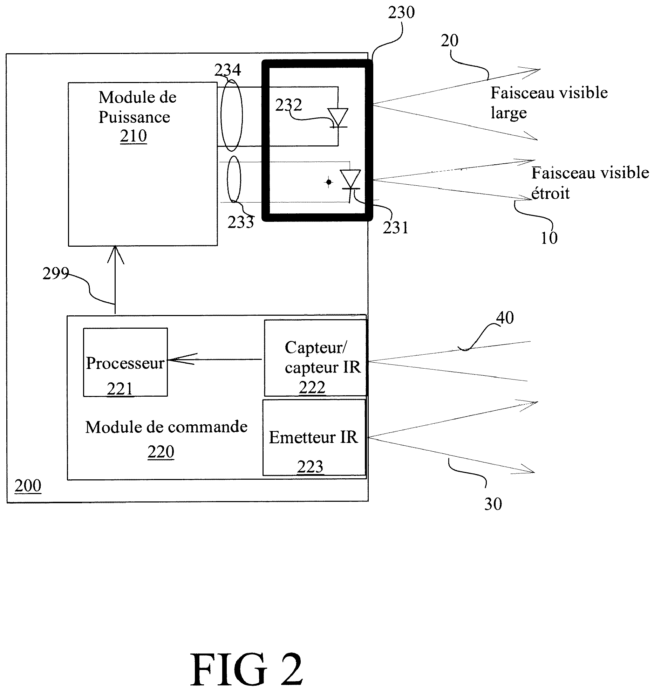

La **figure 2** illustre l'architecture générale d'un premier mode de réalisation d'une lampe 200 - supposée frontale - comportant un système de régulation réactive ou dynamique de l'intensité lumineuse générée par deux faisceaux 10 et 20, respectivement étroit et large. La lampe 200 comprend un module de puissance 210 associé à un module de commande 220 et une unité d'éclairage 230 comportant une pluralité de diodes électroluminescentes DEL (ou LED dans la littérature anglo-saxonne) dotées chacune d'un système focal propre.

Dans l'exemple de la figure 2, l'on a représenté, dans un souci de simplification de l'exposé, un ensemble de deux diodes 231 et 232, respectivement dotées de leurs circuits d'alimentation 233 et 234 connectés au module de puissance 210. Plus généralement, l'on pourra, pour augmenter la luminosité de la lampe, prévoir plusieurs diodes au sein d'un même système optique focal, voire même multiplier le nombre de systèmes optiques afin d'accroître les possibilités d'utilisation de la lampe.

Dans un mode de réalisation spécifique, l'alimentation en courant des diodes LEDs 231 et 232, respectivement via les circuits 233 et 234, est effectuée sous la commande d'une information ou d'un signal de commande 299 généré par le module de commande 220.

Le module de puissance 210 comporte spécifiquement tous les composants que l'on rencontre conventionnellement dans une lampe d'éclairage à LEDs pour la production d'un faisceau lumineux de forte intensité, et en général basée sur la Modulation en Largeur d'Impulsion MLI (ou *Pulse Width Modulation* dans la littérature anglo-saxonne), bien connue d'un homme du métier et similaire à celle que l'on rencontre dans les circuits audio de classe D. Cette modulation MLI est commandée au moyen du signal de commande 299. D'une manière générale, l'on notera que le terme "signal" mentionné précédemment renvoie à une grandeur électrique - courant ou tension - permettant de provoquer la commande du module de puissance, et notamment la modulation MLI servant à alimenter en courant les diodes LED 231 et 232. Il ne s'agit ici que d'un mode particulier de réalisation, étant entendu qu'il sera possible de substituer au "signal de commande 299" toute "information de commande", par exemple une information logique stockée dans un registre et transmise par tout moyen approprié au module de commande 220 dans le but de commander la puissance d'émission du faisceau lumineux. Dans un mode de réalisation particulier, l'on pourra même envisager que les deux modules de commande et de puissance soient intégrés dans un même module ou circuit intégré.

Un homme du métier comprendra donc aisément que lorsque l'on se réfère à un "signal de commande 299", l'on englobe indistinctement les réalisations recourant à une grandeur électrique de commande - courant ou tension - ainsi que les réalisations dans lesquelles la commande est réalisée au moyen d'une information logique transmise au sein du circuit de puissance. Pour cette raison, l'on parlera ci-après indistinctement de *signal* ou *d'information* de commande.

D'une manière générale, les composants qui composent le module de puissance 210 - commutateurs et circuits - sont bien connus d'un homme du métier et l'exposé sera délibérément allégé à cet égard dans une souci de concision. De même, le lecteur sera renvoyé aux ouvrages généraux traitant des divers aspects de la modulation MLI (ou PWM).

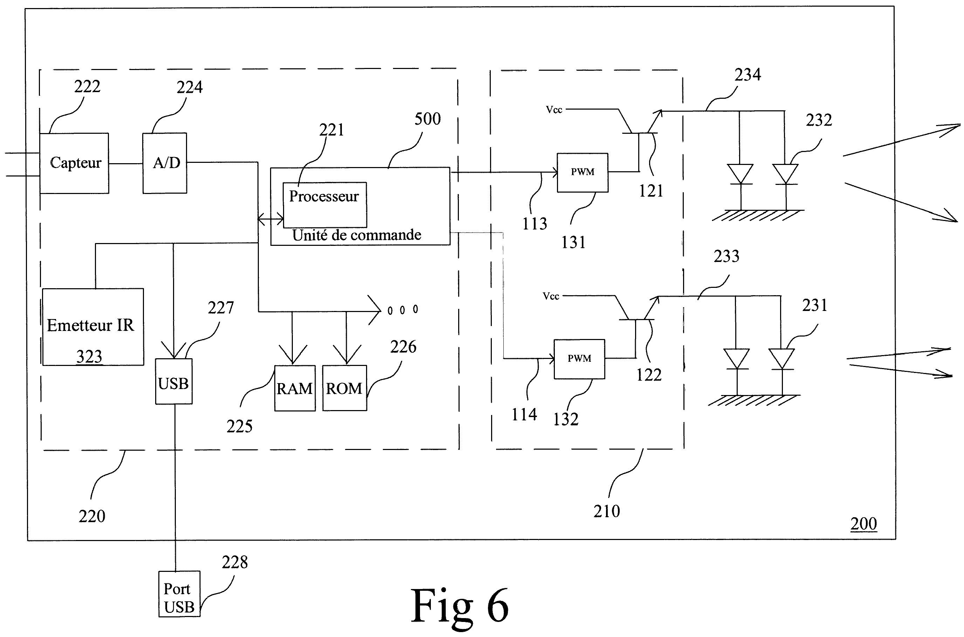

Un exemple plus spécifique de module de puissance sera décrit plus loin en relation avec la figure 6.

En revenant à la figure 2, l'on voit que le module de commande 220 comporte un photocapteur 222, dont l'axe est parallèle à l'axe des LED 231 et 232 et fournissant à un processeur 230 un signal représentatif d'un rayonnement reçu, notamment du milieu ambiant réfléchissant, dans le but de permettre le traitement de ce signal. Le module de commande comporte en outre un émetteur infra-rouge 223, doté d'un système de collimation relativement large - illustré par le faisceau 30 de la figure 2 - et capable de transmettre périodiquement un flux de données via une communication infra-rouge.
Le module de commande comporte également un récepteur infrarouge (IR) permettant la réception d'un signal infra-rouge servant de support à une communication infra-rouge susceptible d'être établie avec une lampe frontale partenaire qui serait située en vis-à-vis.

Dans un mode de réalisation, celui représenté dans la figure 2, le même capteur 222 sert indistinctement à capter le rayonnement visible du milieu ambiant réfléchissant ainsi que le rayon infrarouge potentiellement reçue d'une lampe partenaire.

Alternativement , l'on pourra disposer deux capteurs distincts, un capteur pour le rayonnement lumineux visible (émanant du milieu ambiant réfléchissant) et un capteur plus spécifiquement dédié à la réception du rayonnement infra-rouge d'une lampe partenaire. Cette variante présente l'avantage d'un système de collimation spécifique pour l'infrarouge et pour le visible, étant entendu que le système de collimation pour le rayonnement infrarouge - représenté par le faisceau étroit 40 - sera plus étroit que le faisceau associé à l'émetteur infra-rouge.

Par conséquent, si l'on souhaite conserver un large faisceau pour la capture du rayonnement visible, il pourra être opportun de dissocier les deux capteurs visible et infra-rouge (contrairement à ce qui est représenté dans la figure 2), de manière à organiser un cône très étroit pour la réception infrarouge.

Suivant le mode de réalisation de la figure 2, le signal qui est capté par le photocapteur 222, ou du moins sa composante visible pour ce qui concerne le mode de réalisation de la figure 2, fait l'objet d'un traitement - après conversion dans un format numérique au moyen d'un convertisseur A/D approprié (non représenté sur la figure 2) - approprié par le processeur 221 au sein du module de commande 220.
A cet effet, le processeur peut être amené à effectuer divers traitements, en série ou en parallèle, sur la représentation numérique du signal reçu par le capteur 222, et notamment, des opérations de filtrage, de calcul statistique, de démodulation, de codage/décodage canal permettrant de rendre la communication robuste au bruit, etc... de manière à décoder un trame de données reçues d'une lampe partenaire, ou d'un dispositif partenaire engageant une communication avec la lampe. De telles opérations sont bien connues dans le domaine du traitement du signal, notamment lorsqu'il s'agit d'isoler une composante particulière d'un signal, susceptible de porter une information numérique, et il ne sera pas nécessaire ici d'alourdir l'exposé de la description.

En fonction du traitement numérique du signal opéré par le processeur, mais également le décodage d'éventuelles informations reçues d'une lampe partenaire, le processeur 221 est susceptible de générer une information de commande sur le lien 299 à destination du module de puissance.

Avec la possibilité de venir commander, de manière distincten, les flux lumineux générés par les deux LEDs 231 et 232, respectivement sur les faisceaux étroit et large.

D'une manière générale, plusieurs stratégies de commande sont envisageables pour le module de puissance 210.

Dans un premier mode de réalisation, la communication infrarouge est destinée au transport d'une trame de données, proprement conditionnée et modulée sur le signal IR transmis par l'émetteur IR, et identifiant de manière unique la lampe portative.

Alternativement la trame de données transportée sur le canal infrarouge comporte également, outre l'identification de la lampe, des données de configuration destinées à être échangées entre deux lampes partenaires, voire des instructions correspondant à des commandes ou des opérations à être effectuées au sein de la lampe.

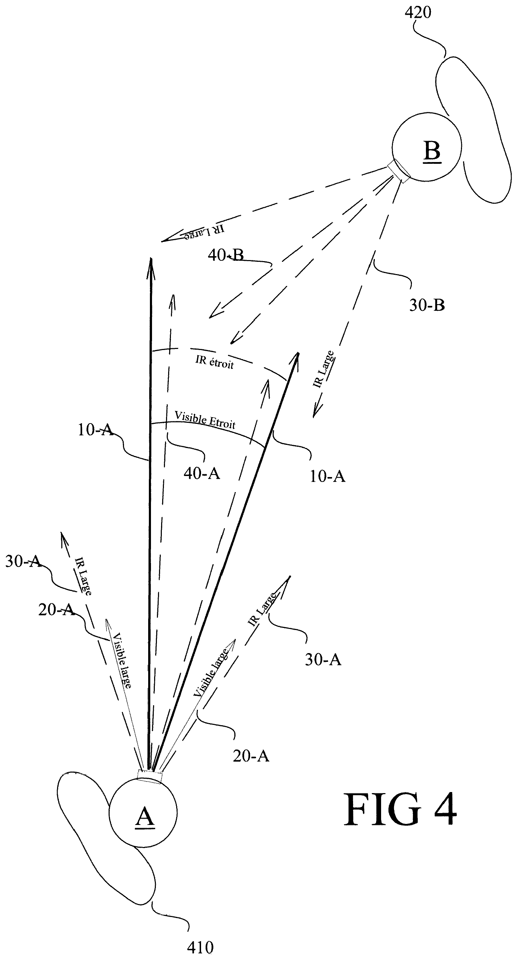

De cette manière, deux lampes se faisant face en "vis-a-vis" pourront échanger des données, recevoir des instructions et, plus généralement, mettre à jour leur données de configuration et leur procédure interne en fonction des données échangées. Avec une multitude de nouvelles possibilités et de nouvelles fonctionnalités qui sont rendues possibles.
En relation avec la figure 4, l'on décrit à présent un exemple spécifique d'une nouvelle fonctionnalité qui est permise, et qui vise la mise en place d'un mécanisme anti-éblouissement des plus utiles pour le porteur de la lampe.

L'on a représenté dans la figure 4, très schématiquement et en vue de dessus, deux utilisateurs A et B, respectivement référencé 410 et 420, qui sont susceptibles d'être dans une situation de vis-à-vis. Chaque utilisateur, dont la tête est schématisée par un cercle, est doté d'une lampe frontale correspondante.

Pour des raisons évidentes de clarté, l'on a repris les références numériques de la figure 2 pour illustrer, dans la figure 4, les différents faisceaux, lumineux et infra-rouge, large et étroit.

Comme on le voit, le porteur A 410, qui regarde potentiellement vers le porteur B 420, comporte une lampe frontale générant deux faisceaux visibles 10-A et 20-A (respectivement étroit et large), un faisceau IR large 30-A et capte avec une collimation étroite - représentée par le cône 40-A, un éventuel faisceau IR.

Symétriquement, le porteur B 420, qui détient lui également une lampe frontale conforme à la présente invention, génère deux faisceaux visibles (mais qui ne sont pas représentés sur la figure pour en accroître la lisibilité), un faisceau infrarouge large IR 30-B et est capte un éventuel rayonnement infrarouge sur son cône (étroit) de réception 40-B.

Par construction, la lampe est conçue de manière à ce que le cône de réception du faisceau infrarouge détecté par le capteur 222 est plus étroit que le faisceau émis par l'émetteur infrarouge 223.

Suivant un aspect de l'invention, le module de commande 220 du porteur A commande une réduction significative de la puissance lumineuse de la lampe dès lors que le capteur IR 222 détecte, sur son cône de réception étroit 40-A, un flux IR qui, proprement démodulé, décodé etc... révèle la présence d'une lampe frontale partenaire.

Dans un mode de réalisation particulier, le module de commande 220 se borne à provoquer l'extinction, ou du moins une baisse significative, du faisceau étroit qui est le plus à même d'éblouir le partenaire B.

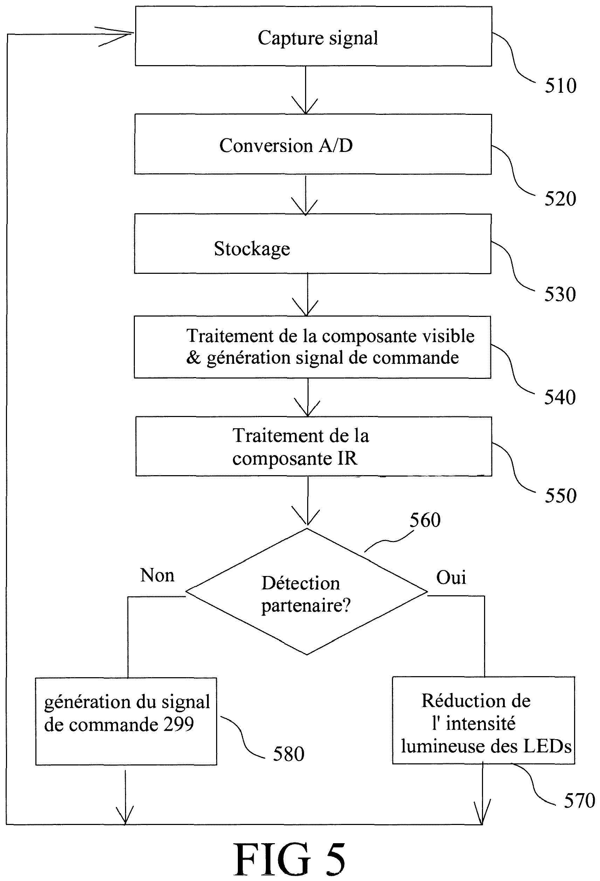

La figure 5 illustre plus particulièrement le procédé mis en oeuvre dans le mode de réalisation de la figure 2, dans lequel un unique capteur 222 permet la capture conjointe du signal lumineux et infrarouge.

Dans une étape 510, la lampe procède, de manière périodique, à la capture du signal généré par le capteur 222.

Dans une étape 520, le signal est converti dans une représentation numérique qui est stockée en mémoire.

Puis dans une étape 530, le processeur 221 effectue un traitement sur l'information stockée en mémoire, et notamment sur la composante visible de la lumière réfléchie et captée par le capteur 222, ce traitement pouvant comporter de multiples opérations, notamment de filtrage ou de calcul statistique (calcul de moyenne etc...).

Puis, dans une étape 540, le processeur 221 calcule, à partir du résultat de traitement effectué sur la composante visible dans l'étape 530, une information de commande destinée à être transmise au module de puissance 210 via le signal de commande 299, et définissant notamment les puissance d'émission des deux faisceaux respectivement étroit et large.

Puis, dans une étape 550, le processeur effectue un traitement plus spécifique de la composante infrarouge du signal capté par le capteur 222 (ou le capteur IR spécifique le cas échéant) pour filtrer, amplifier, démoduler, et décoder le cas échéant l'information perçue via le canal de communication infrarouge (IR).

C'est à l'achèvement de cette étape 560 qu'une lampe frontale partenaire peut être potentiellement détectée par le processeur 221.

Dans une étape 560, le processeur 221 effectue un test pour déterminer si une telle lampe frontale partenaire est détectée, auquel cas le procédé poursuit, avec une étape 570, par une réduction significative de la puissance lumineuse générée sur l'un au moins des faisceaux 10 et 20, et surtout le faisceau étroit 10.

Dans le cas où aucune lampe partenaire n'est détectée, alors le procédé poursuit avec une étape 580 au cours de laquelle le résultat de l'étape 540, à savoir l'information de commande calculée sur la part du visible, est appliquée et transmise au module de puissance 210 via le lien 299, de manière à appliquer telle quelle la régulation "dynamique" ou "réactive".

Puis le procédé retourne à l'étape 510 pour effectuer le traitement d'un nouvel échantillon du signal capté par le capteur 222.

Comme on le voit avec le procédé de la figure 5, le processeur 221 permet de corriger la régulation "dynamique" ou "réactive" conventionnelle en venant réduire significativement le faisceau lumineux projeté dès lors qu'une lampe partenaire entre dans le champ du faisceau étroit du canal infrarouge.

Il en résulte un procédé de régulation de la puissance lumineuse bien plus performant, lequel prend, conjointement, en considération l'information "visible" perçue par le capteur 222, et correspondant à la réponse visible du milieu ambiant réfléchissant, mais également l'information transmise via le canal de communication infra-rouge, pour appliquer d'éventuelles instructions de configuration ou de traitement et, surtout et avant tout, pour éviter une situation d'éblouissement pour la porteur d'une lampe partenaire.

En effet, dès lors que le processeur 221 détecte, sur le cône de réception étroit du capteur IR, la présence d'une lampe frontale partenaire, le même processeur déclenche une réduction significative sur au moins l'un des faisceaux lumineux .

Grâce à cette disposition particulièrement avantageuse, c'est la lampe frontale du porteur A qui "détecte", dans son cône de réception IR étroit, la présence d'une lampe partenaire - appartenant au porteur B - émettant suivant un faisceau plus large, qui baisse également la luminosité. Et ce même si, par ailleurs, le système de commande de la lampe B n'a pas détecté la présence de la lampe A.

En effet, le porteur B qui est le plus exposé à un éblouissement potentiel est celui vers lequel regarde précisément le porteur A et vers lequel, notamment, se concentre le faisceau visible étroit de ce dernier. Il suffirait, alors que le porteur B tourne la tête vers le porteur A pour qu'il soit fortement et dangereusement ébloui. L'inverse n'étant pas vrai, il ne suffirait pas à A de tourner la tête pour être ébloui car B ne le regarde pas.

En procédant ainsi, de manière dissymétrique, par la réduction de l'intensité lumineuse de la lampe détectant un signal transmis par une lampe partenaire, l'on parvient à réduire considérablement les risques d'éblouissement tout en maintenant un éclairage performant pour chacun des utilisateurs.

On notera que la réduction de l'intensité lumineuse qui est appliquée dans l'étape 570 n'est qu'un mode de réalisation particulier.

Dans un mode de réalisation spécifique, le module de commande de la lampe frontale comporte un système de priorité permettant de maintenir l'alimentation du système d'émission IR tout en suspendant l'émission d'un ou plusieurs faisceaux visibles, lorsque la valeur de la tension d'alimentation chute en dessous d'un seuil prédéterminé. Ainsi, le porteur de la lampe pourra être assuré de continuer à bénéficier de "son" système de protection anti-éblouissement alors même que sa pile ou sa batterie est presque totalement déchargée.

Dans un autre mode de réalisation spécifique, l'on réalise un émetteur IR permettant d'être combinée à une lampe générique quelconque de manière à assurer, ici également, une protection du porteur de la lampe générique contre l'éblouissement des autres lampes . A cet effet, il suffit de supprimer des exemples décrits les composants qui sont relatifs à la génération des faisceaux visibles, et de conserver la partie "commande" des exemples décrits, associés à la combinaison de l'émetteur IR 223 et du capteur/capteur IR 222.

### B. Un second mode de réalisation d'une lampe ayant des faisceaux désaxés

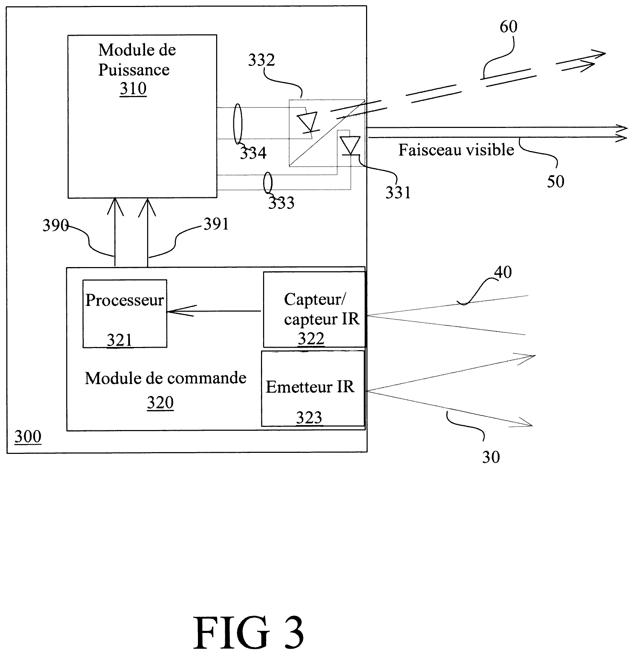

La figure 3 illustre plus particulièrement une variante du mode de réalisation de la figure 2, dans laquelle, l'on substitue, à l'unité 230 du premier mode de réalisation, un jeu de deux diodes ou séries de diodes LEDs présentant des axes légèrement différents. Comme on le voit dans la figure, un premier jeu de diodes (seule une seule diode LED 331 étant illustrée) permet de générer un premier faisceau suivant l'axe 50, tandis qu'un second jeu de diodes (seule une seule diode LED 332 étant illustrée) permet de générer le second faisceau suivant un axe 60. Les deux séries de diodes 331 et 332 sont alimentées au moyen d'un module de puissance 310, similaire au module 210 de la figure 2, respectivement via les conducteurs 333 et 334, eux également commandés par le module de commande 320.

Si la figure 3 illustre un mode de réalisation ne comportant que deux séries de diodes et par là, deux axes 50 et 60, il est clair qu'un homme du métier pourra adapter l'invention de manière à produire un nombre de faisceaux lumineux supérieurs à deux, et suivant des dispositions géométriques diverses.

Dans le mode de réalisation de la figure 3, l'on observe que le module de commande 320 génère deux informations ou signaux de commandes, respectivement 390 et 391 , qui sont destinées à venir commander la puissance émises par les séries de LED qui leur correspondent, ie les LED 331 et 332.

A nouveau, comme dans les deux premiers modes de réalisation décrits précédemment, c'est un traitement du signal généré par un capteur 322 , captant une composante visible mais également IR, qui permet de générer les informations ou signaux de commande 390 et 391.

L'on décrit à présent, en référence à la figure 6, un mode de réalisation plus spécifique où l'on voit que le module de puissance 210 comporte une batterie (non représentée sur la figure), laquelle génère une tension d'alimentation Vcc, et deux commutateurs de puissance, respectivement 121 et 122, permettant d'alimenter en courant les diodes LED 232 et 231 respectivement via leurs circuits 234 et 233, mettant en oeuvre la modulation MLI ou PWM. Les commutateurs 121 et 122 sont par exemple de type à semiconducteur tel qu'un transistor bipolaire, un transistor FET (*Field Effect Transistor*) ou MOS (*Metal Oxyde Semiconductor)* ou MOSFET.

Les deux circuits 233 et 234 sont respectivement commandés par les informations ou les signaux de commandes 113 et 114 générés par une unité de commande 500 intégrée au sein du module de commande 220.

L'unité de commande 500 intègre un processeur 221 communiquant via des bus d'adresses, de données et de commande conventionnels avec de la mémoire RAM 225, de la mémoire ROM ou EEPROM etc... 226.

A titre d'illustration, le capteur 222 qui est représenté dans la figure 6 est un capteur analogique, opérant aussi bien dans le domaine visible qu'infra-rouge, et associé à un convertisseur analogique/numérique 224 permettant la conversion des signaux analogiques en une information numérique qui pourra ensuite être rendue accessible au processeur 221 via les bus de données, d'adresses etc...

Dans un mode de réalisation particulier, l'on pourra envisager de recourir à un unique circuit intégré intégrant les deux fonctions de capture d'images et de traitement du signal capté de manière à permettre une miniaturisation adéquate de la réalisation.

Dans un mode de réalisation préféré, un port USB 280 est accessible via un module USB 270 inclus dans l'unité de commande et connecté au bus, permettant l'échange de données suivant le standard USB. Particulièrement, l'interface USB permettra comme on le verra ci-après, le stockage de paramètres de réglage et de profils au sein de la lampe.

De cette manière, l'unité de commande peut communiquer avec un dispositif de traitement de données tel qu'un ordinateur, un ordinateur portable, une tablette tactile, un assistant personnel et voire même un téléphone intelligent (*Smartphone* suivant la littérature anglo-saxonne).

Il est à noter que le port USB n'est qu'un exemple illustratif d'un moyen de communication entre la lampe et un ordinateur, et qu'un homme du métier pourra envisager tout autre moyen de communication, notamment sans fil (*bluetooth, wifi etc*...) . Dans un mode de réalisation particulier, la lampe frontale disposera même de sa propre adresse IP (Internet Protocol) de manière à pouvoir être aisément configurée, par exemple au moyen d'un serveur web dédié.

Une telle communication est particulièrement avantageuse notamment pour l'échange de données de configuration, tels que des « profils » qui permettent de venir stocker ou sélectionner, en tant que de besoin, des données de réglage de la lampe en fonction de son utilisation souhaitée par son propriétaire, et notamment pour mettre en oeuvre diverses stratégies de régulation et/ou permettre des fonctionnalités spécifiques basées sur les instructions reçues via le canal infrarouge.

L'on pourra ainsi, suivant les profils, venir activer diverses procédures ou modes spécifiques de fonctionnement, notamment un mode statique (débrayage de la régulation), un mode dynamique (activation de la régulation), un mode de communication IR en "maître", un mode en "esclave" etc...

Une fois la lampe configurée, l'on pourra, durant son fonctionnement, modifier certaines procédures, exécuter certaines opérations, voire même procéder à la reconfiguration de la lampe grâce aux éventuelles instructions reçues d'autres lampes ou d'autres dispositifs et transmise via le canal infrarouge.

Avec la possibilité d'une multitude de fonctionnalités nouvelles.

En particulier, l'on peut envisager des profils de configuration différents de la lampe décrite, et notamment la possibilité d'un mode de configuration "maître" ou "esclave". Une lampe configurée en "maître" pourrait ainsi venir modifier la configuration ou commander l'exécution d'une instruction de toute autre lampe préalablement configurée suivant un mode "esclave".

Ainsi, l'on peut organiser aisément des lampes au sein d'un groupement d'utilisateurs qui, rapidement et automatiquement, pourrait adopter une même configuration de base.

Comme on le voit les possibilités offertes par la nouvelles lampe frontale qui est proposée sont multiples.

Et débordent bien le seul problème de l'antiéblouissement.

## Revendications

1. Lampe frontale portative **caractérisée en ce qu'**elle comporte des moyens de communication pour échanger, avec au moins une autre lampe frontale portative des données d'identification, ou de configuration ou des instructions de commande dans laquelle lampe frontale portative comportant une source lumineuse (231, 232) permettant de générer au moins un faisceau lumineux et des moyens de régulation de la puissance dudit faisceau lumineux,
dans laquelle ladite lampe portative comporte des moyens d'émission et de réception d'un canal IR sur un cône d'émission et de réception, respectivement, le cône de réception dudit canal IR étant plus étroit que le cône du faisceau d'émission;
dans laquelle la lampe frontale comporte en outre :
- des moyens d'émission d'un trame d'information sur ledit canal IR ;
- des moyens de réception d'un signal IR capté sur ledit cône de réception étroit;
- des moyens de détection d'un signal IR correspondant à un signal émis par une autre lampe émettant sur ledit canal IR;
- des moyens de réduction de la puissance lumineuse de la lampe en réponse à la détection d'une autre lampe émettant sur ledit canal IR.

2. Lampe frontale portative selon la revendication 1 comportant:
- au moins une source lumineuse (231, 232) permettant de générer au moins un faisceau lumineux;
- des moyens (210) de commande de la luminosité en réponse à une information ou signal de commande;
- un module de commande (220) destiné à générer ladite information ou ledit signal de commande, ledit module de commande comportant un capteur pour générer un signal représentatif de la lumière réfléchie et des moyens de traitement dudit signal pour générer ladite information ou ledit signal de commande;

3. Lampe frontale portative selon la revendication 1 ou 2 **caractérisée en ce que** la lampe comporte en outre:
- un émetteur IR capable d'émettre périodiquement des données sur un canal de communication IR présentant un premier faisceau;
et **en ce que** ledit module de commande (220) comporte en outre:
- des moyens pour capter un rayonnement IR suivant un cône de réception plus étroit que ledit premier faisceau;
- des moyens de traitement du signal généré pour traiter le signal représentatif de l'information IR captée et détecter la présence d'une seconde lampe émettant un signal IR;
- des moyens pour réduire significativement la puissance générée par ladite lampe en réponse à la détection d'une lampe partenaire émettant des données sur le canal IR.

4. Lampe frontale portative selon la revendication 3 **caractérisé en ce qu'**elle comporte un faisceau large et un faisceau étroit, le faisceau étroit étant réduit significativement en réponse à la détection d'une lampe partenaire émettant sur le canal IR.

5. Lampe frontale portative selon la revendication 3 **caractérisée en ce qu'**elle comporte un ou plusieurs faisceaux désaxés permettant d'être commandées de manière différenciées.

6. Lampe frontale portative selon la revendication 2, 3 ou 4, **caractérisé en ce que** le module de commande (220) comporte des moyens pour interrompre les faisceaux lumineux tout en maintenant l'émission IR en fin de vie de la pile ou de la batterie d'alimentation.

7. Lampe frontale portative selon la revendication 3 **caractérisée en ce que** le module de commande comporte des moyens permettant de transmettre des informations via ledit canal infra-rouge, lesdites informations comportant l'identifiant de la lampe mais également des instructions liées à des opérations à effectuer ou des données de configuration destinées aux autres lampes.

8. Lampe frontale portative selon l'une des revendications précédentes **caractérisée en ce qu'**elle comporte des moyens de configuration, notamment suivant un ou plusieurs profils déterminés, ladite configuration étant réalisée au moyen d'un port de communication, tel que USB, permettant la communication avec un ordinateur, une tablette tactile ou un téléphone intelligent (*smartphone*).

9. Lampe frontale portative selon l'une des revendications précédentes, **caractérisée en ce que** ledit canal infrarouge est utilisé pour le transport de données d'identification et/ou de configuration et/ou des instructions destinées à une lampe partenaire.

10. Lampe frontale portative selon l'une des revendications précédentes **caractérisée en ce qu'**elle consiste en une lampe frontale, et **en ce qu'**elle comporte des diodes de type LED.

11. Dispositif de communication destiné à être positionné sur la tête d'un utilisateur ou associée à une lampe portative d'un utilisateur, et comportant des moyens de communication avec une lampe frontale portative définie dans l'une quelconque des revendications 3 à 10, de manière à commander, en situation de vis-à-vis, la réduction de l'intensité lumineuse générée par ladite lampe.

12. Procédé de régulation de la puissance émise par une lampe frontale portative comportant une source lumineuse (231, 232) permettant de générer au moins un faisceau lumineux, ladite lampe portative comportant des moyens d'émission et de réception d'un canal IR, le cône de réception dudit canal IR étant plus étroit que le cône du faisceau d'émission;
le procédé étant **caractérisé en ce qu'**il comporte les étapes:
- émission d'un trame d'information sur ledit canal IR ;
- réception d'un signal IR capté sur ledit cône de réception étroit;
- détection d'un signal IR correspondant à un signal émis par une autre lampe émettant sur ledit canal IR;
- réduction de la puissance lumineuse de la lampe en réponse à la détection d'une autre lampe émettant sur ledit canal IR.

## Patentansprüche

1. Tragbare Stirnlampe, **dadurch gekennzeichnet, dass** sie Kommunikationsmittel umfasst, um mit mindestens einer anderen tragbaren Stirnlampe Erkennungsdaten oder Konfigurationsdaten oder Steueranweisungen auszutauschen, wobei die tragbare Stirnlampe eine Lichtquelle (231, 232) umfasst, wodurch es möglich wird, mindestens einen Lichtstrahl zu erzeugen sowie Regulierungsmittel für die Leistung des genannten Lichtstrahls,
wobei besagte tragbare Lampe Mittel zum Abstrahlen und zum Empfang eines IR-Kanals auf einen Abstrahl- bzw. auf einem Empfangskegel umfasst, wobei der Aufnahmekegel des genannten IR-Kanals schmaler als der Kegel des Ausgabestrahls ist;
wobei die Stirnlampe außerdem folgendes umfasst:
- Mittel zur Ausgabe eines Informationsrahmens über besagten IR-Kanal;
- Mittel zum Empfang eines IR-Signals, das auf besagtem schmalem Empfangskegel empfangen wurde;
- Mittel zur Erkennung eines IR-Signals, das einem Signal entspricht, das von einer anderen Lampe ausgegeben wird, die auf besagtem IR-Kanal sendet;
- Mittel zur Reduzierung der Lichtleistung der Lampe als Reaktion auf die Erkennung einer anderen Lampe, die auf besagtem IR-Kanal sendet.

2. Tragbare Stirnlampe nach Anspruch 1, die folgendes umfasst:
- mindestens eine Lichtquelle (231, 232), wodurch es möglich wird, mindestens einen Lichtstrahl zu erzeugen;
- Mittel (210) zur Steuerung der Helligkeit als Reaktion auf eine Steuerinformation oder ein Steuersignal;
- ein Steuermodul (220), um besagte Steuerinformation oder besagtes Steuersignal zu erzeugen, wobei besagtes Steuermodul einen Sensor umfasst, um ein repräsentatives Signal für das reflektierte Licht zu erzeugen, und Mittel zur Verarbeitung des genannten Signals, um besagte Steuerinformation oder besagtes Steuersignal zu erzeugen;

3. Tragbare Stirnlampe nach Anspruch 1 oder 2, **dadurch gekennzeichnet, dass** die Lampe außerdem folgendes umfasst:
- einen IR-Sender, der in der Lage ist, zeitweise Daten auf einem IR-Kommunikationskanal auszugeben, der einen ersten Lichtstrahl aufweist;
- sowie dadurch, dass besagtes Steuermodul (220) außerdem folgendes umfasst:
- Mittel zum Empfang eines IR-Strahls, der einem schmaleren Empfangskegel folgt als der besagte erste Lichtstrahl;
- Mittel zur Verarbeitung des erzeugten Signals, um das repräsentative Signal für die empfangene IR-Information zu verarbeiten und um das Vorhandensein einer zweiten Lampe zu erkennen, die ein IR-Signal ausgibt;
- Mittel, um die von besagter Lampe erzeugte Leistung deutlich zu verringern, als Reaktion auf die Erkennung einer Partnerlampe, die Daten auf dem IR-Kanal ausgibt.

4. Tragbare Stirnlampe nach Anspruch 3, **dadurch gekennzeichnet, dass** sie einen breiten Lichtstrahl und einen schmalen Lichtstrahl umfasst, der schmale Lichtstrahl wird deutlich verringert als Reaktion auf die Erkennung einer Partnerlampe, die auf dem IR-Kanal sendet.

5. Tragbare Stirnlampe nach Anspruch 3, **dadurch gekennzeichnet, dass** sie einen oder mehrere außeraxiale Lichtstrahlen umfasst, die differenziert gesteuert werden können.

6. Tragbare Stirnlampe nach Anspruch 2, 3 oder 4, **dadurch gekennzeichnet, dass** das Steuermodul (220) Mittel umfasst, um die Lichtstrahlen zu unterbrechen, unter Beibehaltung der IR-Ausgabe am Ende der Nutzungsdauer der Batterie oder der Versorgungsbatterie.

7. Tragbare Stirnlampe nach Anspruch 3, **dadurch gekennzeichnet, dass** das Steuermodul Mittel umfasst, um Informationen über besagten Infrarotkanal zu übertragen, wobei die Informationen die Identifizierung der Lampe umfassen, aber auch Anweisungen zu durchzuführenden Operationen oder Konfigurationsdaten, die für die anderen Lampen bestimmt sind.

8. Tragbare Stirnlampe nach einem der vorhergehenden Ansprüche,
**dadurch gekennzeichnet, dass** sie Konfigurationsmittel umfasst,
insbesondere nach einem oder mehreren bestimmten Profilen, wobei besagte Konfiguration mittels eines Kommunikationsanschlusses wie USB hergestellt wird,
wodurch die Kommunikation mit einem Computer, einem Touchscreen oder einem Smartphone möglich wird.

9. Tragbare Stirnlampe nach einem der vorhergehenden Ansprüche,
**dadurch gekennzeichnet, dass** besagter infraroter Kanal für den Transport von Erkennungs- und/oder Konfigurationsdaten benutzt wird, und/oder für Anweisungen, die für eine Partnerlampe bestimmt sind.

10. Tragbare Stirnlampe nach einem der vorhergehenden Ansprüche,
**dadurch gekennzeichnet, dass** sie aus einer Stirnlampe besteht, und dadurch, dass sie Dioden vom Typ Leuchtdiode umfasst.

11. Kommunikationsvorrichtung, die dafür bestimmt ist, auf dem Kopf eines Nutzers positioniert oder mit einer tragbaren Lampe eines Nutzers verbunden zu sein, und die Mittel zur Kommunikation mit einer tragbaren Stirnlampe umfasst, wie sie in einem beliebigen der Patentansprüche 3 bis 10 definiert ist, um bei einem Aufeinandertreffen die Reduzierung der von besagter Lampe erzeugten Lichtintensität zu steuern.

12. Verfahren zur Regulierung der von einer tragbaren Stirnlampe abgegebenen Leistung, die eine Lichtquelle (231, 232) umfasst, um mindestens einen Lichtstrahl zu erzeugen, besagte tragbare Lampe umfasst Mittel zur Ausgabe und zum Empfang eines IR-Kanals, wobei der Empfangskegel des genannten IR-Kanals schmaler ist als der Kegel des Ausgabelichtstrahls;
wobei das Verfahren **dadurch gekennzeichnet ist, dass** es folgende Phasen umfasst:
- Ausgabe eines Informationsrahmens über besagten IR-Kanal;
- Empfang eines auf besagtem schmalen Empfangskegel empfangenen IR-Signals;
- Erkennung eines IR-Signals, das einem von einer anderen Lampe ausgegebenen Signal entspricht, die auf besagtem IR-Kanal sendet;
- Reduzierung der Lichtleistung der Lampe als Reaktion auf die Erkennung einer anderen Lampe, die auf besagtem IR-Kanal sendet.

## Claims

1. A portable headlamp **characterized in that** it comprises communication means for exchanging, with at least one other portable headlamp, identification data, or configuration data or control instructions, wherein said portable lamp comprises one light source (231, 232) for generating at least one light beam and means for controlling the brightness of said light beam,
Wherein said portable headlamp comprises means for emitting and receiving an infra-red IR channel with an emitting cone and a receiving cone, respectively, the receiving cone of said IR channel being narrower than the emitting cone;
Wherein the headlamp further comprises:
- means for emitting a information frame on said IR channel;
- means for receiving an IR signal sensed on said narrower receiving cone;
- means for sensing of IR signal corresponding to a signal emitted by another lamp emitting on said IR channel;
- means for reducing the power of the light of the lamp in response to the detection of another lamp emitting on said IR channel.

2. The portable headlamp according to claim 1 comprising:
- at least one light source (231, 232) for generating at least one light beam;
- means (210) for controlling the brightness in response to information or control signal;
- a control module (220) for generating said information or said control signal, said control module comprising a sensor for generating a signal representative of the reflected light and means for processing said signal to generate said information or said signal of control;

3. The portable headlamp according to claim 1 or 2 **characterized in that** the lamp further comprises:
- an IR transmitter capable of periodically transmitting data on an IR communication channel having a first beam;
and **in that** said control module (220) further comprises:
- means for sensing IR radiation in a narrower receiving cone than said first beam;
- signal processing means for processing the signal representative of the IR information sensed and for detecting the presence of a second lamp emitting an IR signal;
- means for significantly reducing the power generated by said lamp in response to the detection of a partner lamp emitting data on the IR channel.

4. The portable headlamp according to claim 3 **characterized in that** it comprises a wide beam and a narrow beam, the narrow beam being significantly reduced in response to the detection of a partner lamp emitting on the IR channel.

5. The portable headlamp according to claim 3 **characterized in that** it comprises one or more off-axis beams which can be controlled through different manners.

6. The portable headlamp according to claim 2, 3 or 4, **characterized in that** the control module (220) comprises means for interrupting the light beams while maintaining the IR emission when the powering battery comes to its end of life.

7. The portable headlamp according to claim 3 **characterized in that** the control module comprises means for transmitting information via said infra-red channel, said information comprising the identifier of the lamp but also instructions related to operations to be performed or configuration data for other lamps.

8. The portable lamp according to one of the preceding claims **characterized in that** it comprises configuration means, in particular according to one or more determined profiles, said configuration being performed by means of a communication port, such as USB, allowing communication with a computer, a touch pad or a smartphone.

9. The portable lamp according to one of the preceding claims, **characterized in that** said infrared channel is used for the transport of identification and / or configuration data and / or instructions for a partner lamp.

10. The portable lamp according to one of the preceding claims, **characterized in that** it consists of a headlamp, and **in that** it comprises diodes of LED type

11. A communication device intended to be positioned on the head of a user or associated with a portable lamp of a user, and comprising means of communication with a portable lamp defined in any one of claims 3 to 10, so as to to control, in opposite situation, the reduction of the luminous intensity generated by said lamp.

12. A method of regulating the power emitted by a portable headlamp comprising a light source (231, 232) for generating at least one light beam, said portable headlamp comprising means for transmitting and receiving an IR channel, the cone of receiving said IR channel being narrower than the cone of the transmitted beam;
the method being **characterized in that** it comprises the steps of:
- transmitting an information frame on said IR channel;
- receiving an IR signal sensed on said narrow receiving cone;
- sensing an IR signal corresponding to a signal emitted by another lamp emitting on said IR channel;
- reducing the light power of the lamp in response to the detection of another lamp emitting on said IR channel.
